# EUROPÄISCHE PATENTSCHRIFT

(11) **EP 1 215 004 B1**
(45) Veröffentlichungstag und Bekanntmachung des Hinweises auf die Patenterteilung: **28.09.2005**
(21) Anmeldenummer: 01128297.7
(22) Anmeldetag: 29.11.2001
(51) Int. Cl.: B23D 59/00, B27B 31/06, G01B 11/02, G06T 7/00

(54) **Verfahren zum Überwachen und Steuern der Versetzung von Baumstämmen**
Method for monitoring and controlling the displacement of logs
Procédé pour surveiller et commander le déplacement de troncs d'arbres

(30) Priorität: 30.11.2000 IT BZ000052
(43) Veröffentlichungstag der Anmeldung: 19.06.2002
(73) Patentinhaber: MICROTEC S.r.l., 39042 Bressanone (Bolzano) (IT)
(72) Erfinder: Giudiceandrea, Federico, 39042 Bressanone (BZ) (IT); Widu, Kurt, 9300 St. Veit/Glan (AT)
(74) Vertreter: Ghioni, Carlo Raoul Maria

(56) Entgegenhaltungen:
- US-A- 3 886 372
- US-A- 4 413 662
- US-A- 5 228 112
- US-A- 5 765 617
- US-A- 5 918 653

## Beschreibung

Die Erfindung betrifft ein Verfahren gemäß dem Oberbegriff des Anspruchs 1. Ein solches Verfahren ist aus dem Dokument US 5,765,617 bekannt.

In den Sägewerken werden die Baumstämme einer Vielzahl von Bearbeitungen und Vorgängen unterzogen, um sowohl sie für nachfolgende, speziellere an einer anderen Stelle durchzuführende Bearbeitungen vorzubereiten als auch um unmittelbar im Sägewerk Bretter oder Balken zu erhalten. All diese Bearbeitungen und Vorgänge erfolgen üblicherweise in geeigneten, voneinander verschiedenen Arbeitsstationen, wodurch der Transport der Baumstämme von einer Arbeitsstation in die andere erforderlich ist.

Der Transport erfolgt üblicherweise über dazu zweckmäßig angepasste Förderbänder, die derart angeordnet sind, dass innerhalb des Sägewerks die erforderliche Vielzahl von Laufstrecken geschaffen wird, welche die Ankunft und den Abgang eines Baumstammes in und von jeder Arbeitsstation erlauben.

Solche Transporte werden selbsttätig gesteuert, indem Weichen, Endschalter und ähnliche Führungs- und Steuervorrichtungen derart geschaltet werden, dass der Baumstamm möglichst schnell und längs der kürzesten Strecke zur ausgewählten Arbeitsstation geführt und gefördert wird.

Diese bekannte Technik weist jedoch Mängel auf. Die kritischen Stellen der Strecke, wie z.B. die Kurven, die Weichen, die Endschalter, der Übergang von einem Förderband zum anderen, der Eintritt und der Austritt eines Baumstammes in eine und aus einer Arbeitsstation, das Laden und das Abladen des Baumstammes auf und von den Förderbändern und ähnlichen werden nämlich gestaltet und geplant, indem auf eine optimale Idealsituation Bezug genommen wird, welche die Vielzahl von möglichen tatsächlich stattfindenden Situationen schematisieren soll. Idealbedingungen dieser Idealsituation, die beispielsweise genannt werden können, sind: gerade, gleichmäßig entlaubte, längs der Längsmitte der Förderbänder angeordnete Baumstämme regulärer Form usw.

Dazu ist jedoch in Betracht zu ziehen, dass in der Wirklichkeit die Baumstämme die Besonderheit aufweisen, dass der eine von den anderen verschieden ist und sie in ihrer Position zufolge ihres gekrümmten Querschnittes nicht stabil sind, wodurch sie dazu neigen, mit einer gewissen Leichtigkeit abzurollen, d.h. sich zu verstellen.

Trotz einer umsichtigen und aufmerksamen Planung ist es daher sehr schwierig, die große Anzahl von möglichen Situationen und Positionen vorauszusehen, die vorkommen könnten und, aufgrund von einer oder mehrerer der vielen im Spiel stehenden Variablen, wie die Länge, der Durchmesser, die Form des Querschnittes, das Gewicht, das Volumen des Baustammes usw, von der optimalen, idealen angenommenen Situation abweichen.

Es geschieht daher mit einer gewissen Häufigkeit, dass während des Transports die Baumstämme aufgrund von dynamischen Beanspruchungen, denen sie ausgesetzt sind, ihre vorgesehene Ideal-Position verlassen. Dies kann insbesondere beim Erreichen der oben genannten, kritischen Stellen der Strecke zu Stößen und Schäden, zum Abfallen des Baumstammes vom Förderband oder zum Blockieren der Strecke führen. In Anbetracht des Platzbedarfes und des Gewichtes eines Baumstammes verschlechtert jede der oben genannten Situationen, außer eine Gefahrenquelle für die Bedienungspersonen zu sein, die Wirksamkeit des Sägewerkes, zumal die Förderbänder angehalten werden müssen und auf sie der eventuell herabgefallene Stamm wieder aufgeladen werden muss, oder der Stamm, der eine nicht zulässige Position eingenommen hat, wieder in Position gebracht werden muss.

Das o.g. Dokument US 5,765,617 offenbart ein Verfahren, das sich auf eine dieser kritischen Stellen bezieht. Insbesondere handelt es sich um ein Verfahren zum geradlinigen Zuleiten von einem Baustamm zu einer Bearbeitungsstation. Um sicherzustellen, dass der Baustamm in eine für die durchzuführende Bearbeitung ordnungsgemässe Stellung zugeleitet wird bzw. um die Bearbeitungsstation an die Stellung des ankommenden Baustammes anzupassen, sieht dieses Verfahren folgende Vefahrenschritte vor:
- ein Aufnahmegerät wird dem unmittelbar vor der Bearbeitungsstation liegenden Abschnitt des Förderbandes zugeordnet, um das ankommende Baustamm aufzunehmen,
- man setzt die Versetzungsvorrichtung der Baumstämme in Betrieb, sodaß diese von den Förderbändern zu der Bearbeitungsstation befördert werden;
- mit dem Aufnahmegerät wird ständig eine Aufnahme des Baustammes beim Erreichen des vor der Bearbeitungsstation liegenden Streckenabschnittes gemacht und diese Aufnahme wird einem elektronischen Rechner übertragen;
- der elektronische Rechner berechnet den Profil und die aktuelle Stellung des Baustammes sowie jene die der Baustamm aufweisen sollte um bestens bearbeitet zu werden
- es werden Drehmittel betätigt, die den Baustamm in der erwünschten Stellung versetzen.

Danach kann, um das Verfahren zu vervollständigen, vorgesehen werden, dass der Baustamm mit einem zweiten Aufnahmegerät ein zweites Mal aufgenommen wird, um zu überprüfen, ob der Baustamm sich tatsächlich in der gewünschten Stellung befindet.

Dieses Verfahren findet aber nur für eine besondere Situation Anwendung, nämlich das geradlinige Zuleiten an einer Bearbeitungsstation.

Wie bereits erläutert wurde, gibt es mehrere Arten von verschiedenen kritischen Stellen, sodass ein für alle kritischen Stellen anwendbares Verfahren erwünscht wäre.

Die Aufgabe der vorliegenden Erfindung besteht in der Entwicklung eines Verfahrens, das die Vermeidung von schwerwiegenden, wie oben angedeuteten Folgen erlaubt, sodass das Sägewerk sicherer gestaltet werden kann und seine Wirksamkeit erhöht wird.

Diese Aufgabe wird durch ein Verfahren gelöst, das die im kennzeichnenden Teil des Anspruchs 1 angegebenen Merkmale aufweist.

Mit dem erfindungsgemäßen Verfahren kann der Baumstamm nicht mehr von den Förderbändern herabfallen bzw. nicht mehr gefährdende und unannehmbare Positionen einnehmen, da vor dem Erreichen einer jeden kritischen Stelle der Strecke seine Position selbsttätig überprüft und bewertet wird. Sobald dann diese Position derart ist, dass befürchtet werden muss, dass der Baumstamm nicht mehr in der Lage ist, ohne Probleme die kritische Stelle zu überwinden werden entweder Berichtigungsmittel betätigt, die auf den Stamm wirken und ihn zweckmäßiger Weise verstellen, oder, in Extremfällen, die Förderbänder angehalten. Auch bei diesem letzteren Fall ist jedenfalls das daraus folgende Anhalten der Maschinen gewiss kürzer als zur Zeit beim Stand der Technik, da der Stamm noch nicht von den Förderbändern herabgefallen ist.

Weitere Vorteile und Merkmale der Erfindung gehen näher aus der folgenden Beschreibung von Ausführungsbeispielen hervor, die nur beispielsweise und nicht ausschließend erläutert werden.

Wie erwähnt, betrifft die Erfindung ein Verfahren zum Überwachen und Steuern der Versetzung von Baumstämmen längs einer Vielzahl von Förderbändern, die derart angeordnet sind, dass sie Arbeitsstationen durchlaufende Strecken bilden. Solche Förderbänder können bevorzugter Weise jene sein, die innerhalb eines Sägewerkes angeordnet sind, in dem die Baumstämme bearbeitet werden.

Auf einer solchen Strecke sind grundsätzlich immer kritische Stellen vorhanden, unter denen Stellen zu verstehen sind, an denen Veränderungen in der Bewegungslinie eintreten, längs welcher der Baumstamm bewegt wird. Solche Veränderungen können beispielsweise Richtungsänderungen sein, die sowohl seitlich erfolgen und auf Kurven und Weichen zurückzuführen sind als auch in der Höhe erfolgen und auf Übergänge von einem Förderband auf ein anderes bzw. auf das Laden und Entladen des Stammes auf das oder vom Förderband zurückzuführen sind. Weitere Veränderungen werden von Beschleunigungen oder Bremsungen verursacht, die zufolge des Eintritts oder des Austritts aus einer der Bearbeitungsstationen oder aber auf das Einwirken von Endschaltern zurückzuführen sind.

Damit der Baumstamm mit Sicherheit und unter aufmerksamer Beobachtung des Auftreten von unregelmäßigen Situationen, die das problemlose Durchlaufen dieser kritischen Stelle gefährden könnten, von einer Arbeitsstation zur anderen gebracht werden kann, sind erfindungsgemäß an jeder kritischen Stelle der Strecke folgende Verfahrensschritte a), b1), b2), c), d) ,e1), e2) vorgesehen:
a) ein Aufnahmegerät wird der kritischen Stelle und dem unmittelbar vor der kritischen Stelle liegenden Abschnitt des Förderbandes zugeordnet, um Bilder des ankommenden Stammes zu erzeugen, wobei das Aufnahmegerät eine Digitalkamera ist und derer Bilder Digitalbilder sind;
b1) es werden Digitalbilder des Stammes erzeugt, sowohl in der idealen Stellung, die der Stamm aufweisen sollte, um ohne Probleme die kritische Stelle durchlaufen zu können, als auch in typischen sich wiederholenden und schon bekannten falschen Stellungen, wobei diese Digitalbilder des sich in solchen Stellungen befindlichen Stammes in einem elektronischen Rechner zur Schaffung einer Datenbank gespeichert werden, in der, unter Bezugnahme auf alle kritische Stellen der Strecke, die Bilder aller Ideal-Stellungen, welche die Stämme aufweisen sollten, und aller schon bekannten falschen Stellungen, welche die Stämmen aufweisen konnten, gespeichert sind;
**b2)** jedem in der Datenbank gespeicherten Bild wird jene eventuelle Tätigkeit zugeordnet, die erfolgen muss, um zu vermeiden, dass Probleme beim Durchlaufen der kritischen Stelle seitens des Stammes entstehen, wobei einem gespeicherten Bild auch keine Tätigkeit zugeordnet werden kann, wenn man annimmt, dass die im Bild dargestellte Stellung keine Probleme beim Durchlaufen der Stelle verursachen wird
c)man setzt die Versetzungsvorrichtung der Baumstämme in Betrieb, sodaß diese von den Förderbändern längs der zu diesem Zweck vorgesehenen und voreingestellten Strecken zu den verschiedenen Arbeitsstationen befördert werden;
**d)** mit dem Aufnahmegerät wird ständig ein aktuelles Bild des Stammes beim Erreichen des vor der kritischen Stelle liegenden Streckenabschnittes erzeugt und dieses Bild wird einem elektronischen Rechner übertragen;
**e1)** das aktuelle Digitalbild aus dem Verfahrenschritt d), das dem elektronischen Rechner übertragen wird, wird von diesem mit allen in der Datenbank gespeicherten Bildern verglichen, wobei jenes gespeicherte Bild ermittelt wird, das zwischen allen dem aktuellen, erfassten Bild am ähnlichsten ist;
e2) es werden jene eventuelle Tätigkeiten durchgeführt, die dem gespeicherten Bild zugeordnet sind, das im Verfahrenschritt e1) ermittelt wurde.

Als Beispiel wird das oben angegebene Verfahren unter Bezugnahme auf eine Kurve erläutert. Zur Erstellung der Datenbank der gespeicherten Bilder, wird der Baumstamm z.B. in optimaler Situation angeordnet, und zwar längs der Längsmitte des geraden Abschnittes eines Förderbandes ausgerichtet, das zu der Kurve führt und dann in den verschiedenen möglichen schrägen Positionen, d.h. in typischen schon bekannten und voraussehbaren falschen Positionen. Dem die optimale Position dargestellten, gespeicherten Bild wird keine Tätigkeit zugeordnet. Den weiteren gespeicherten Bildern, d.h. jenen, die den schräggestellten Stamm darstellen, muss nicht gezwungener Weise allen eine Tätigkeit zugeordnet werden, sondern nur jenen, für die der Winkel in Querstellung des Stammes derart ist, dass der Stamm nicht in der Lage ist, die Kurve zu überwinden, und dazu bestimmt ist, entweder sich in ihr zu verklemmen, indem die Strecke blockiert wird, oder gerade fortzulaufen, wobei er dann vom Förderband herabfallen wird.

Beide diese Folgen sind schwerwiegend, da der vom Förderband herabfallende Baumstamm außer Kontrolle ist und eine große Gefahr darstellt, während eine Blockierung der Strecke einen gegebenenfalls noch größeren Schaden mit sich bringt, weil, solange die Förderbänder nicht angehalten werden, die Stämme fortfahrend ankommen und sich unvermeidlich aufeinander stapeln, sodass sie ihrerseits von den Förderbändern herabfallen.

Um dies alles zu vermeiden, vergleicht der elektronische Rechner das aktuelle Bild, das ständig von der Aufnahmekamera eingeht, mit allen jenen, die in der Datenbank gespeichert wurden, und bestimmt das gespeicherte Bild, das unter allen am meisten dem aktuellen Bild ähnlich ist. Nachfolgend wird die eventuell vorgesehene und bei der Planung und Abnahme des Verfahrens dem gespeicherten, durch den Rechner bestimmten Bild zugeordnete Tätigkeit durchgeführt. Dabei kann es sich um ein Anhalten der Förderbänder handeln, oder um das Betätigen von Berichtigungsmitteln, die im vorliegenden Fall beispielsweise ein Paar von Stößeln sein können, die auf den Stamm wirken, indem sie ihn mit der Mittellinie des vor der Kurve liegenden Bandabschnittes derart ausrichten, dass der Stamm möglichst in die optimale Position gebracht wird, um ohne Probleme die Kurve zu überwinden.

Eine weitere kritische Stelle ist wie erwähnt das Ende der Strecke, bei dem im allgemeinen ein Endschalter angeordnet ist. Es ist klar, dass, sollte die Position des ankommenden Stammes derart sein, dass sie nicht vom Endschalter erfasst werden kann, dort die sehr ernste Gefahr besteht, dass der Stamm nicht gebremst wird und mit seiner ganzen Gewalt seinen Lauf fortfährt. Auch in diesem Fall ist gemäß der Erfindung vorgesehen, dass die Aufnahmekamera den ankommenden Stamm aufnimmt und dessen aktuellen Bild dem elektronischen Rechner sendet, der das aktuelle erhaltene Bild mit jenen in der Datenbank gespeicherten vergleicht. In der Datenbank wurden zuvor die optimale Position, die der Stamm einnehmen sollte, und jene typischen, falschen Positionen gespeichert, unter welchen beispielsweise die Situation eines in zwei oder mehreren Stümpfen gespaltenen Baumstammes sehr wichtig sein wird. All diesen in der Datenbank gespeicherten Bildern, die Situationen und Positionen darstellen, gemäß welchem der Baumstamm nicht auf den Endschalter wirken wird, wird bei der Planung und Abnahme des Verfahrens eine Tätigkeit zugeordnet, z.B. die Betätigung von Hilfsbremsmitteln des Baumstammes.

Beispielsweise möchte man nun das den Gegenstand der Erfindung bildende Verfahren auch unter Bezugnahme auf eine kritische Stelle erläutern, die durch eine Weiche dargestellt ist, d.h. ein Element, das die Vorschubrichtung des Baumstammes ändert. Solche Weichen wirken im allgemeinen durch das Aufgleiten des Stammes auf ihnen und sind derart ausgebildet, dass der Baumstamm allmählich in eine gewisse Richtung geleitet wird. Das Ausmaß der Ablenkung ist proportional zur Gleitstrecke des Stammes auf der Weiche, wodurch, sollte der ankommende Stamm sich in eine außermittige Position befinden, d.h. seitlich verschoben gegenüber jener optimalen, kann er entweder nicht die gesamte vorgesehene Gleitstrecke durchlaufen, wodurch er weniger als notwendig abgelenkt wird, oder er wird eine größere Gleitstrecke als vorgesehen durchlaufen, wodurch er mehr abgelenkt wird als erforderlich. Auch in diesem Fall wird der elektronische Rechner, über die Aufnahmekamera und den daraus folgenden Vergleich zwischen dem aktuellen, von der Aufnahmekamera übermittelten Bild und der Vielzahl von in der Datenbank gespeicherten Bildern, in der Lage sein, jenes gespeicherte Bild zu bestimmen, das am besten die aktuelle Situation darstellt. Als typische, sich wiederholende falsche Positionen sind verschiedene geneigte Positionen in Querrichtung und jene in Betracht zu ziehen, in denen der Stamm zwar parallel zur Mittellinie des Förderbandes liegt, jedoch die Mittellinie des Stammes und jene des Förderbandes nicht zusammenfallen. Jedem der gespeicherten Bilder wird, falls erforderlich, eine Tätigkeit zugeordnet, das den Stamm in eine annehmbare Position bringt. Eine solche Tätigkeit ist beispielsweise die Aktivierung von Stammausricht- und -verstellmitteln, die geeignet sind, den Stamm in eine Position zu bringen, die der optimalen Position nahe ist, sodass die Ablenkung das gewünschte Ausmaß bekommt.

Das erfindungsgemäße Verfahren ist auch am Eingang in und am Ausgang aus der Arbeitsstation anwendbar.

Unter Bezugnahme auf den Eingang in einer Arbeitsstation, kann es erforderlich sein, dass, aus Gründe die mit der Arbeitsart (beispielsweise die Entrindung oder der Schnitt) verbundenen sind, es wichtig wäre, dass der Stamm in einer bestimmten Position gegenüber den Bearbeitungswerkzeugen ankommt. In diesem Fall ist es gemäß der Erfindung möglich, durch die Positionierung einer digitalen Aufnahmekamera, durch das Aufnehmen des Bildes des ankommenden Stammes und durch den Vergleich desselben mit jenen in der Datenbank gespeicherten Bilder, Angaben über die Position zu bekommen, die der ankommende Stamm aufweist. Das gespeicherte Bild, das durch den elektronischen Rechner bestimmt wird, ist jenes, das sich am meisten der wirklichen Situation nähert, und sollte dieses gespeicherte Bild einer unannehmbaren Position entsprechen, wird man dieser bei der Planung und Abnahme die erforderliche, durchzuführende Tätigkeit zugeordnet haben, um die Situation zu lösen, wie z.B. die Aktivierung von Berichtigungsmitteln der Position des Baumstammes oder das Anhalten der Förderbänder, bevor der Baumstamm in die Arbeitsstation eintritt.

Zweckmäßiger Weise ist in allen oben genannten Beispielen der Erfindung möglich nach dem Schritt d) den folgenden, weiteren Schritt d1) vorzusehen: zufolge einer von einem Beobachter durchgeführte Handbetätigung, wird in der Datenbank jenes aktuelle Bild gespeichert, das durch die Aufnahmekamera im dem Augenblick erfasst wurde, in dem die Handbetätigung durchgeführt wurde.

Dies erlaubt die Anzahl der in der Datenbank gespeicherten Bilder zu ergänzen, indem alle jene neue Bilder hinzugefügt werden, die während der Versetzung der Baumstämme erscheinen und die sich auf Positionen des Stammes bzw. Positionen in denen sich der Stamm befinden könnte beziehen, die nicht bei der Planung und der Abnahme vorgesehen wurden. Der Beobachter hat sehr wenig Zeit zur Verfügung, um zu entscheiden diese Handbetätigung durchzuführen, wodurch anfangs diesen neuen gespeicherten Bilder keine Tätigkeit zugeordnet wird. Dies erfolgt gegebenenfalls später, nach aufmerksamen und ausgewogenen Bewertungen, deren Ausgang auch jener sein könnte, dass das auf diese Weise gespeicherte Bild von keinem Interesse ist und es dann von der Datenbank gelöscht wird.

Zur Durchführung des Vergleichs zwischen Bildern, werden bekannte Korrelationstechniken mathematischer Art verwendet.

Jedes Bild kann in eine große, wählbare Zahl von sogenannten Pixel aufgetrennt werden, d.h. Bildabschnitten von gleichmäßiger Farbe. Bei Bildern in schwarz-weiß, wird jedes Pixel durch ein mehr oder weniger tiefes Grau gekennzeichnet sein. Eine angemessene Pixel-Zahl für den vorliegenden Fall ist beispielsweise 40000.

Es ist hervorzuheben, dass die Position eines jeden Pixels innerhalb des Bildes bekannt ist und dass die Farbtiefe des Pixels einer Zahl zugeordnet werden kann, die daher matematisch die Farbtiefe davon darstellt. Jedem in einer bekannten Position sich befindlichen Pixel kann daher eine Zahl in Abhängigkeit seiner Farbtiefe zugeordnet werden.

Seinerseits kann das Bild eindeutig durch seine Pixels und durch die diesen Pixels zugeordneten Zahlen gekennzeichnet sein. Wenn man nähmlich die den Pixels zugeordneten Zahlen als Koordinaten eines n-dimensionalen Raumes betrachtet, bei dem n der Pixelanzahl gleich ist, dann ist das Bild als Punkt in diesem n-dimensionalen Raum durch die Menge der n-Zahlen eindeutig bestimmbar, wobei jede Zahl mathematisch die Tiefe des eigenen Pixels darstellt.

Zur Bestimmung des gespeicherten Bildes, das sich am meisten dem aktuellen, von der Aufnahmekamera gesandten Bild nähert, muss daher der elektronische Rechner nicht anderes tun, als jenes gespeicherte Bild bestimmen, das im gerade erläuterten n-dimensionalen Raum den kleinsten Abstand vom aktuellen Bild aufweist. Dies geschieht mit bekannten Rechenmethoden der Geometrie.

Die vorliegende Erfindung löst somit die ihr gestellte Aufgabe.

## Patentansprüche

1. Verfahren zum Überwachen und Steuern der Versetzung von Baumstämmen längs einer Vielzahl von Förderbändern, die derart angeordnet sind, dass sie Arbeitsstationen durchlaufende Strecken bilden, bei dem für jede
kritische, vom Baumstamm durchzulaufende Stelle der durchzulaufenden Strecke, wie etwa Kurven, Weichen, Endschalter, Übergang von einem Förderband zum anderen, Eintritt und Austritt des Baumstamms in und aus einer Arbeitsstation, Laden und Abladen des Baumstamms auf oder von einem Förderband und ähnlichen, folgende Verfahrensschritte vorgesehen werden:
a) ein Aufnahmegerät wird der kritischen Stelle und dem unmittelbar vor der kritischen Stelle liegenden Abschnitt des Förderbandes zugeordnet, um Bilder des ankommenden Stammes zu erzeugen;
c)man setzt die Versetzungsvorrichtung der Baumstämme in Betrieb, sodaß diese von den Förderbändern längs der zu diesem Zweck vorgesehenen und voreingestellten Strecken zu den verschiedenen Arbeitsstationen befördert werden;
d)mit dem Aufnahmegerät wird ständig ein aktuelles Bild des Stammes beim Erreichen des vor der kritischen Stelle liegenden Streckenabschnittes erzeugt und dieses Bild wird einem elektronischen Rechner übertragen;
**dadurch gekennzeichnet, dass** das Aufnahmegerät eine Digitalkamera ist und derer Bilder Digitalbilder sind **und dass** zwischen den Verfarenschritten a) und c) folgende Verfahrenschritte durchgeführt werden:
b1) es werden Digitalbilder des Stammes erzeugt, sowohl in der idealen Stellung, die der Stamm aufweisen sollte, um ohne Probleme die kritische Stelle durchlaufen zu können, als auch in typischen sich wiederholenden und schon bekannten falschen Stellungen, wobei diese Digitalbilder des sich in solchen Stellungen befindlichen Stammes in einem elektronischen Rechner zur Schaffung einer Datenbank gespeichert werden, in der, unter Bezugnahme auf alle kritische Stellen der Strecke, die Bilder aller Ideal-Stellungen, welche die Stämme aufweisen sollten, und aller schon bekannten falschen Stellungen, welche die Stämmen aufweisen konnten, gespeichert sind;
b2) jedem in der Datenbank gespeicherten Bild wird jene eventuelle Tätigkeit zugeordnet, die erfolgen muss, um zu vermeiden, dass Probleme beim Durchlaufen der kritischen Stelle seitens des Stammes entstehen, wobei einem gespeicherten Bild auch keine Tätigkeit zugeordnet werden kann, wenn man annimmt, dass die im Bild dargestellte Stellung keine Probleme beim Durchlaufen der Stelle verursachen wird
und dass nach dem Verfahrenschritt d) folgende Verfahrenschritte durchgeführt werden:
e1) das aktuelle Digitalbild aus dem Verfahrenschritt d), das dem elektronischen Rechner übertragen wird, wird von diesem mit allen in der Datenbank gespeicherten Bildern verglichen, wobei jenes gespeicherte Bild ermittelt wird, das zwischen allen dem aktuellen, erfassten Bild am shulichsten ist;
e2) es werden jene eventuelle Tätigkeiten durchgeführt, die dem gespeicherten Bild zugeordnet sind, das im Verfahrenschritt e1) ermittelt wurde.

2. Verfahren nach Anspruch 1, **dadurch gekennzeichnet, dass** nach dem Verfahrenschritt d) das weitere folgende Verfahrenschritt vorgesehen ist:
**d1)** zufolge einer von einem Beobachter durchgeführte Handbetätigung, wird in der Datenbank jenes aktuelle Digitalbild gespeichert, das durch die Aufnahmekamera im dem Augenblick erfasst wurde, in dem die Handbetätigung durchgeführt wurde.

## Claims

1. Method for monitoring and controlling the displacement of logs along a plurality of conveyor belt arranged in such a way as to constitute paths traversing work stations, comprising, for each critical point of the path the log has to travel, e.g. curves, switches, end stop switches, passage from one conveyor belt to another, entrance and exit of the log into and out of a work station, loading and unloading of the log onto or from a conveyor belt and the like, the following operative steps:
a) associating a video imaging device to the critical point and to the segment of conveyor belt immediately preceding the critical point, to create images of the incoming log;
c) activating the device for displacing the logs, which will be transported by the conveyor belts to the various work stations along the paths provided and set up for this purpose;
d) continuously creating, with the video imaging device, a current image of the log as it reaches the path segment preceding the critical point, and transmitting this image to an electronic computer;
**characterised in that** the video imaging device is a digital television camera and its images are digital images and **in that** between the operating steps a) and c), the following operating steps are carried out:
**b1)** creating digital images of the log, both in the ideal position it should have in order to traverse without problems the critical point and in all typical, recurring and previously known erroneous positions, said digital images of the log arranged in such positions being stored in an electronic computer in order to create a database in which are stored with reference to all the critical points of the path the images of all ideal positions the logs should have and all known erroneous positions the log may have;
**b2)** associating to each image stored in the database any activity to be carried out in order to avoid the emergence of problems when the log traverses the critical point, it being possible not to associate any activity to a stored image, since the position shown in the image is deemed not to be a source of problems;
and **in that** after the operating step d) the following operating steps are carried out:
**e1)** the current image produced in the operating step d) and transmitted to the electronic computer is compared thereby with all the images stored in the database, the stored image that, among all, most closely resembles the current image obtained being determined;
e2) carrying out any activities associated to the stored image that was determined in the operating step e1).

2. Method as claimed in claim 1, **characterised in that** after step d), it comprises the following further step d1):
as a result of a manual command imparted by an observer, the current image obtained by the digital television camera in the instant when the manual command was imparted is stored in the database.

## Revendications

1. Procédé pour surveiller et commander le déplacement de troncs d'arbres le long d'une pluralité de tapis roulants disposés de manière à constituer des parcours traversant des postes de travail, dans lesquels sont prévues, pour chaque point critique du parcours que le tronc doit parcourir, comme par exemple virages, déviations, interrupteurs fin de course, passage d'un tapis roulant à l'autre, entrée et sortie du tronc d'un poste de travail, chargement et déchargement du tronc sur ou d'un tapis roulant et simmilaires, les phases opérationnelles suivantes:
a) on associe un dispositif d'enregistrement vidéo au point critique et à la zone du tapis roulant immédiatement précédente au point critique, pour créer des images du tronc qui arrive;
c) on met en fonction le dispositif de déplacement des troncs d'arbres, lesquels seront déplacés des tapis roulants aux différents postes de travail le long des parcours prévus et disposés dans ce but;
d) avec le dispositif d'enregistrement vidéo, on crée en continu une image actuelle du tronc lorsqu'il atteint la zone du parcours précédente au point critique et cette image est transmise à un élaborateur électronique;
**caractérisé en ce que** le dispositif d'enregistrement vidéo est une caméra digitale et **en ce que** ses images sont digitales, et **en ce qu'**entre les phases opérationnelles a) et c) sont effectuées les phases opérationnelles suivantes:
**b1)** on crée des images digitales du tronc, soit dans la position idéale qu'il devrait présenter pour pouvoir traverser sans problèmes le point critique, soit dans toutes les positions erronées typiques fréquentes et déjà connues, ces images digitales du tronc disposé dans de telles positions étant mémorisées dans un élaborateur électronique dans le but de créer une base de données dans laquelle sont mémorisées en référence à tous les points critiques du parcours les images de toutes les positions idéales qui devraient présenter les troncs et de toutes les positions erronées déjà connues que pourraient présenter les troncs;
b2) on associe à chaque image mémorisée dans la banque de données l'éventuelle activité, qui doit être exercée pour éviter qu'émergent des problèmes lors de la traversée du point critique de la part du tronc, à une image mémorisée pouvant également n'être associée aucune activité, étant donné que l'on considère que la position représentée dans l'image n'est pas source de problèmes;
et qu'après la phase opérationnelle d) sont effectuées les phases opérationnelles suivantes:
**e1)** l'image actuelle produite dans la phase opérationnelle d) et transmise à l'élaborateur électronique est confrontée par ce dernier à toutes les images mémorisées dans la base de données, étant déterminée l'image mémorisées qui parmis toutes les images ressemble le plus à l'image actuelle enregistrée;
e2) on effectue les éventuelles activités associées à l'image mémorisée qui a été déterminée dans la phase opérationnelle e1).

2. Procédé selon la revendication 1, **caractérisé en ce qu'**après la phase d) est prévue l'ultérieure phase d1) suivante: à la suite d'une comande manuelle lancée par un observateur, on mémorise dans la base de données l'image actuelle enregistrée par la caméra digitale à l'instant où a été envoyée la comande manuelle.
